# EUROPEAN PATENT APPLICATION

(11) **EP 4 311 608 A1**
(43) Date of publication of application: **31.01.2024**
(21) Application number: 23187223.5
(22) Date of filing: 24.07.2023
(51) Int. Cl.: B21D 17/02, B21C 37/28, B21D 41/02, B29C 57/04, B21D 39/04

(54) **APPARATUS FOR MECHANICAL MACHINING BY PLASTIC DEFORMATION OR FOR ASSEMBLING A PAIR OF COMPONENTS, AND RELATIVE MACHINE TOOL COMPRISING SUCH AN APPARATUS**

(30) Priority: 27.07.2022 IT 202200015924
(71) Applicant: Gnutti Transfer S.p.A., 25035 Ospitaletto (Brescia) (IT)
(72) Inventor: Gnutti, Renato, 25035 Ospitaletto (BS) (IT); Coraglia, Stefano, 25035 Ospitaletto (BS) (IT)
(74) Representative: Perani & Partners S.p.A.

(57) **Abstract**

An apparatus (1) for mechanical machining by plastic deformation, comprising:
- a support unit (2) configured to support a workpiece (P);
- a first and a second punch (3, 4) which are opposite and movable to and from the support unit (2) along a direction of action (X-X) to switch between an operating position in which they exert a pair of compression forces (F 1, F2) adapted to plastically deform the workpiece (P) and a resting position in which they are spaced apart from the support unit (2), said pair of compression forces (F 1, F2) generating a pair of reaction forces (R1, R2) opposite to themselves;
- actuation means (5) adapted to control the movement of the first and the second punch (3, 4) to and from the support unit (2) along a direction of action (X-X);
- a floating element (6) adapted to support the first and the second punch (3, 4) from opposite sides of the support unit (2) along the direction of action (X-X) and configured to receive said reaction forces (R1, R2).

## Description

### DESCRIPTION

### Technical Field

The present invention relates to an apparatus for mechanical machining by plastic deformation or for assembling a pair of components.

An object of the present invention is also a machine tool for mechanical machining by plastic deformation or for assembling a pair of components comprising the aforementioned apparatus.

The present invention can be usefully employed in the field of mechanical machining for plastic deformation, for example, for the realization of ducts with circumferential bulges or fittings.

Furthermore, the present invention can be employed in operations of mechanically assembling and fitting a pair of components, in particular for realizing interference couplings.

### State of the art

Machine tools for forming variable section ducts are known in the state of the art.

For example, DE2110758A1 and EP0649689A1 disclose machine tools for plastic deformation machining suitable for making fittings such as sleeves for connecting pipes or ducts.

In detail, said machines comprise a mould adapted to receive a tube to be deformed and a pair of punches configured to exert compression forces at opposite ends of said tube, so as to plastically deform it on the mould.

The intensity of the forces exerted by the punches depends on several factors, including the geometric characteristics and the material of the tube to be deformed.

It should be noted that, according to the third principle of dynamics (principle of action-reaction), the forces exerted by the punches generate opposite reaction forces that are discharged to the ground by means of special elements of feedback and support of the punches.

Given the significant intensity of the forces exerted by the punches, and consequently of the reaction forces, machine tools of the type disclosed above require important feedback elements, which significantly increase the size and weight of the machine tool itself.

In addition, the need to create feedback and support elements for punches of important dimensions and masses renders incompatible the integration of the aforementioned plastic deformation technologies in machine tools with automatic piece transfer, more commonly referred to as transfer machines. In this regard, it should be noted that the important size of the aforementioned feedback and support elements contrasts with the need for transfer machines to support a plurality of processing stations in spaces as contained as possible.

### SUMMARY OF THE INVENTION

In this context, the technical task underlying the present invention is to propose an apparatus for mechanical machining by plastic deformation or for assembling a pair of components and a relative machine tool that overcomes the drawbacks of the prior art mentioned above.

In particular, it is an object of the present invention to provide a small-sized apparatus for mechanical machining by plastic deformation or for assembling a pair of components.

In particular, it is an object of the present invention to provide an apparatus for mechanical machining by plastic deformation or for assembling a pair of components that can be integrated in a machine tool with automatic transfer of the piece.

### Advantages of the invention

The apparatus that is the object of the present invention solves the aforementioned technical problem in that it comprises a floating element adapted to support a first and a second punch configured to exert compression forces on a workpiece or on a pair of components to be assembled.

Advantageously, the floating element is configured to receive the reaction forces arising from the operating of the compression forces which, being equal in modulus and orientation but opposite in direction, cancel on the floating element itself and do not need to be discharged to the ground.

It is therefore evident that by doing so it is possible to avoid the use of feedback elements of important dimensions and masses for the discharge of the reaction forces to the ground. Therefore, the apparatus that is the object of the present invention has a reduced size and can be integrated in a machine with automatic transfer of the piece.

### LIST OF FIGURES

Further features and advantages of the present invention will become clearer from the indicative, and therefore non-limiting, disclosure of an apparatus for mechanical machining by plastic deformation or for assembling a pair of components and a related machine tool, as illustrated in the accompanying drawings, wherein:
- Figure 1 shows a perspective sectional view of an apparatus according to the present invention shown in a resting position;
- Figure 2 shows a magnification of Figure 1 to better highlight some technical details;
- Figure 3 shows a perspective view of the apparatus of Figure 1 shown in a drag position mode;
- Figure 4 shows a magnification of Figure 3 to better highlight some technical details;
- Figure 5 shows a perspective view of the apparatus in Figure 1 in an operating configuration thereof;
- Figure 6 shows a magnification of Figure 5 to better highlight some technical details;
- Figure 7 shows a magnification of Figure 6;
- Figure 8 shows a perspective view of a machine tool according to the present invention;

Figure 9 shows a perspective view of the machine tool of Figure 8 with some components removed to better illustrate others.

### DETAILED DESCRIPTION

With reference to the accompanying Figures, the present invention relates to an apparatus 1 that can be employed both for plastic deformation and for assembling a pair of components.

In the context of the present invention "mechanical machining by plastic deformation" refers to all types of processing that involve mechanical loads to induce plastic deformations in the workpiece to be processed, i.e. that remain when loads cease.

Furthermore, in the context of the present invention, the term "assembling" is intended to indicate the mechanical operation of joining two or more components, preferably, but not necessarily, by carrying out an interference coupling. For example, the apparatus that is the object of the present invention can be employed for fitting shafts, bushings, tongues or bearings in respective holes or openings specially dimensioned to carry out an interference coupling with these. For the definition of interference coupling, see the well-known theory of dimensional tolerances.

In general, the apparatus 1 that is the object of the present invention can be employed in all those processing or mechanical operations that require the application of a pair of compression forces.

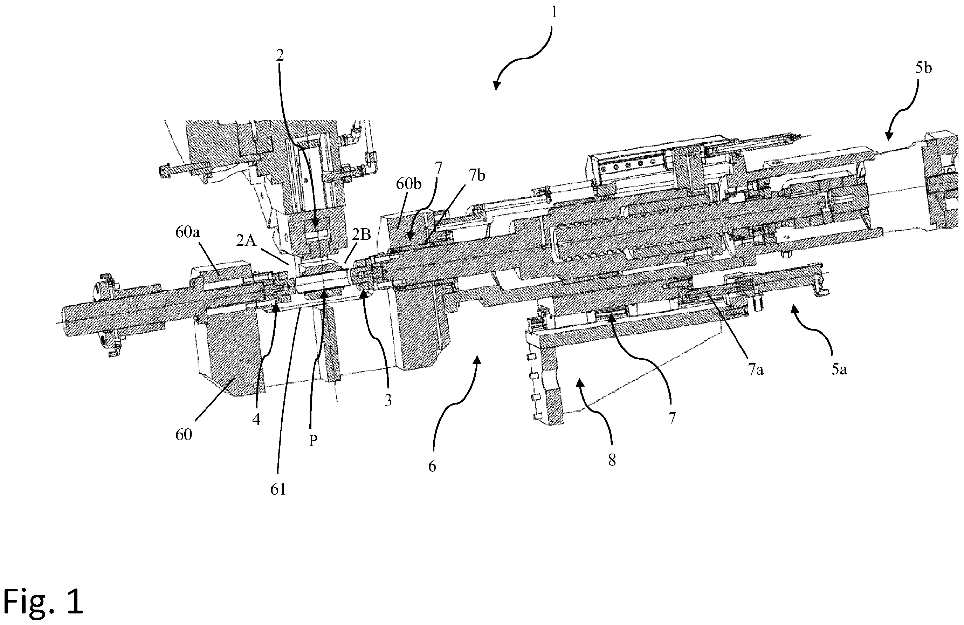

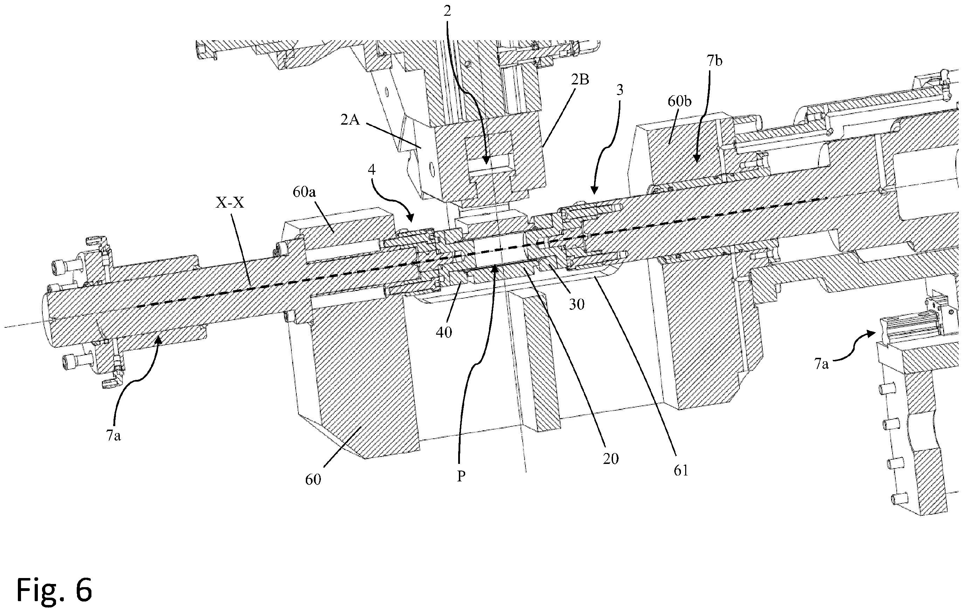

With reference to Figures 1-7, the apparatus 1 includes a support unit 2 configured to support a workpiece P, when the apparatus 1 is employed for mechanical machining by plastic deformation, and at least one of the components to be assembled when the apparatus 1 is employed for assembling operations.

In a possible embodiment, the support unit 2 is configured to support at least two components to be assembled by aligning them along a coupling direction.

For the sake of simplicity, the following will refer exclusively to the workpiece P, however what has been said in relation to the latter also applies to the at least one component to be assembled.

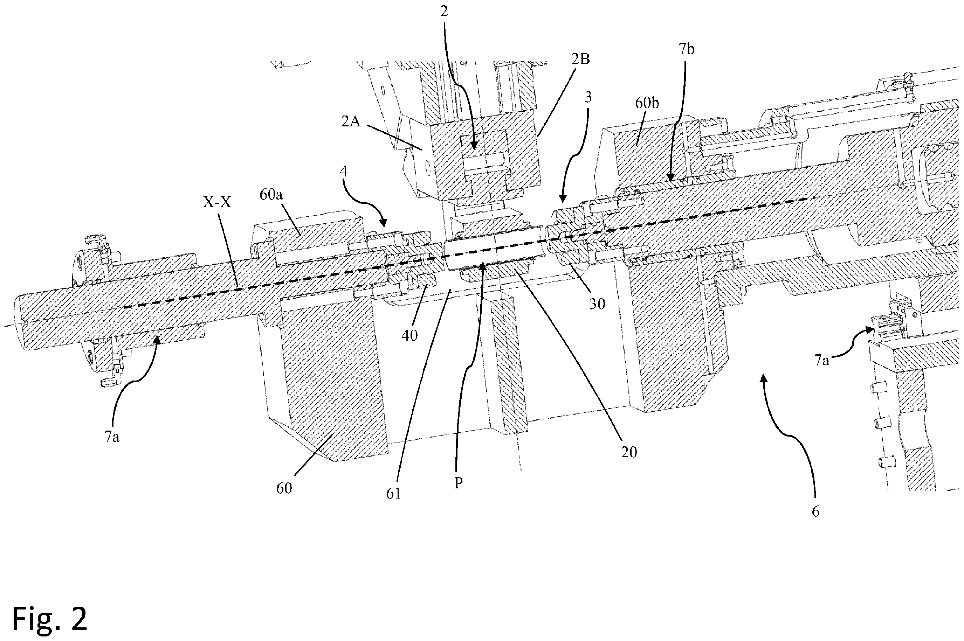

In detail, with reference to Figure 2, the support unit 2 has a first side 2A and a second side 2B opposite to the first 2A along a direction of action X-X that will be further disclosed below.

Preferably, the support unit 2 is configured to support the workpiece P by arranging it between the first and second sides 2A, 2B.

The apparatus 1 that is the object of the present invention further comprises a first and second punch 3, 4 adapted to impart respective pushing actions on the workpiece P.

With reference to Figures 1 and 2, the first and second punches 3, 4 are opposite and arranged on opposite sides of the support unit 2.

In detail, the first and second punches 3, 4 face, respectively, the first and second sides 2A, 2B of the support unit 2, thus being arranged on opposite sides of the workpiece P. In particular, each punch 3, 4 is associated with an end portion of the workpiece P.

The first and the second punch 3, 4 are movable from and toward the support unit 2 along a direction of action X-X to switch between an operating position in which they exert a pair of compression forces F 1, F2 adapted to plastically deform the workpiece P and a resting position in which they are spaced apart from the support unit 2.

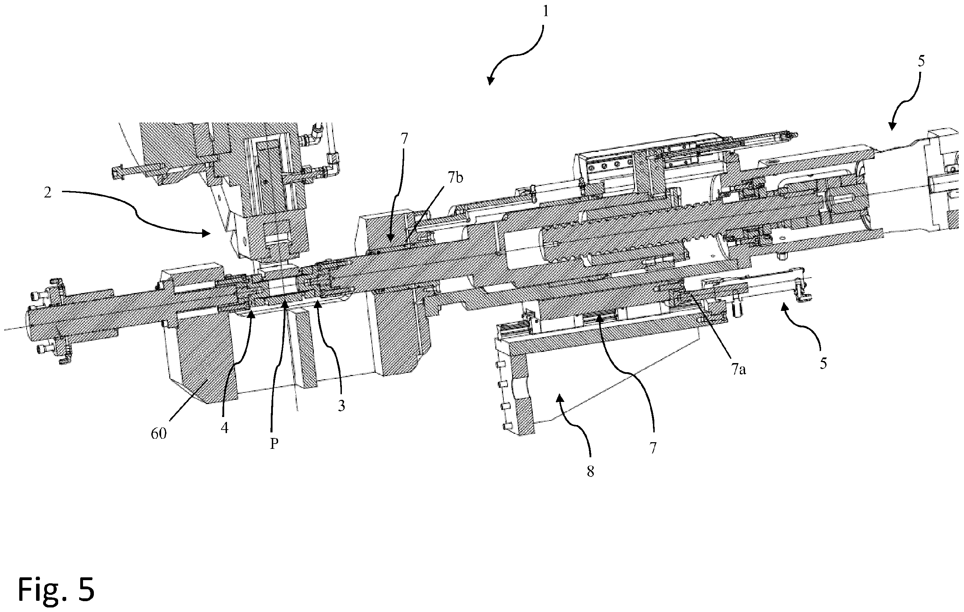

With reference to Figures 5-7, in the operating position the first and second punches 3, 4 push the workpiece P from opposite sides along the direction of action X-X by exerting the pair of compression forces F 1, F2.

It should be specified that the pair of compression forces F 1, F2 are directed in opposite verses along the same direction of action X-X. Preferably, the pair of compression forces F1, F2 are equal in modulus.

With reference to Figures 1 and 2, in the resting position the first and second punches 3, 4 are not in contact with the workpiece P and therefore do not exert any compression force on it.

Preferably, in the operating position the first and second punches 3, 4 are located at the first and second sides 2A, 2B of the support unit 2 along the direction of action X-X, while in the resting position they are spaced apart from the first and second sides 2A, 2B of the support unit 2 along the direction of action X-X.

It should be specified that if the apparatus 1 is used for assembling components, the pair of compression forces F1, F2 is used to achieve the coupling of the components to be assembled, which does not necessarily imply their plastic deformation. For example, the compression forces F1, F2 can be employed to clamp a shaft in a respective bore by performing interference coupling.

In addition, it should be specified that in the case where the apparatus 1 is employed for assembling components, the first and second punches 3, 4 exert the compression forces on respective distinct components so as to assemble them along an assembly direction coinciding with the direction of action X-X of the punches 3, 4. The components to be assembled may, for example, both be supported by the support unit 2 or one by the support unit 2 and the other arranged between the support unit and a punch 3, 4 or both mounted on a respective punch 3, 4.

With reference to Figures 1-7, the apparatus 1 comprises actuation means 5 configured to control the movement of the first and second punches 3, 4 from and toward the support unit 2 along the direction of action X-X. In other words, the actuation means 5 are configured to switch the first and second punches 3, 4 between the operating and resting positions.

The actuation means 5 can act directly or indirectly on the movement of the punches 3, 4. More details on the actuation means 5 will be provided later in the disclosure.

The apparatus 1 further comprises a floating element 6 adapted to support the first and second punches 3, 4 from opposite sides of the support unit 2 along the direction of action X-X. In detail, the floating element is configured to arrange the first and second punches 3, 4 according to what is disclosed above and shown in the attached figures.

At least one punch 3, 4 is free to be moved along the direction of action X-X with respect to the floating element 6.

Preferably, according to what is shown in Figures 1-7, the second punch 4 is fixed to the floating element 6. In other words, the second punch 4 is constrained to the floating element 6, in particular along the direction of action X-X.

It should be noted that, according to the third principle of dynamics (action-reaction principle), the operating of the compression forces F1, F2 on the workpiece P generates on the floating element a pair of reaction forces R1, R2, opposite to compression forces F1, F2.

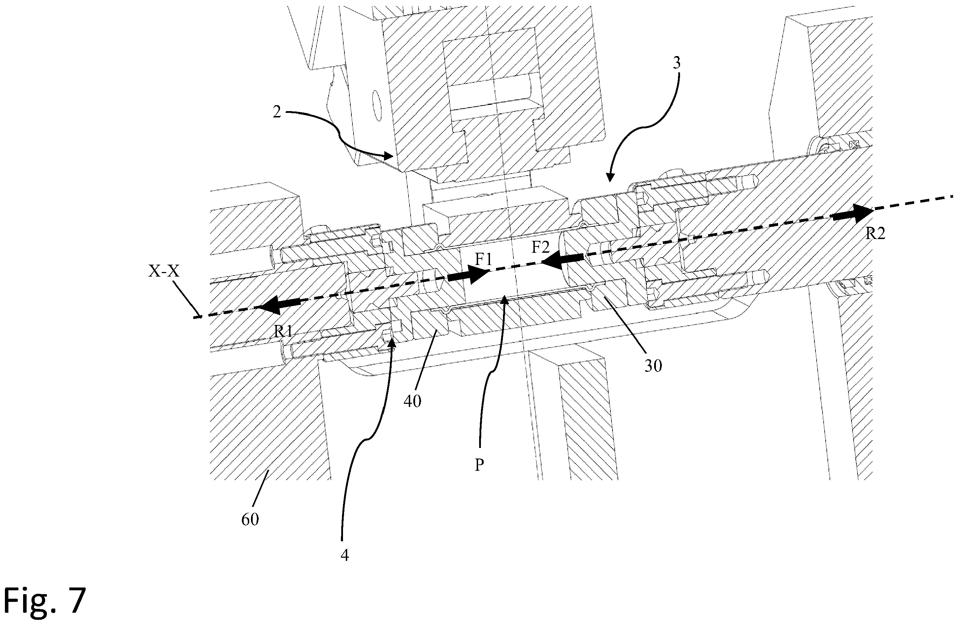

It should be noted that the term "opposite" means that the pair of reaction forces R1, R2 has the same modulus but opposite directions with respect to the compression forces F1, F2. The diagram of the forces is shown in Figure 7.

In particular, the first and the second punch 3, 4 exert on the workpiece P, respectively, a first compression force F1 and a second compression force F2 opposite to the first compression force F1.

The first and second compression forces F1, F2 respectively generate a first reaction force R1 opposed to the first compression force F 1, and a second reaction force R2 opposed to the second compression force F2. With reference to the force diagram shown in Figure 7, the first and second reaction forces R1, R2 are discharged onto the floating element 6 acting along the direction of action X-X in opposite directions by pulling it. In particular, the reaction forces R1, R2 place in traction what is hereinafter defined as the main body 60 of the floating element 6. More details about this main body 60 will be provided in the following disclosure.

It should be noted that the floating element 6 is configured to receive and support the reaction forces R1, R2 which, by discharging on it, cancel out. Therefore, advantageously, the reaction forces R1, R2 are not discharged to the ground.

The floating element 6 is movable along the direction of action X-X of the first and second punches 3, 4, preferably with respect to the support unit 2.

In detail, in the embodiment shown in Figures 1-7, the apparatus 1 comprises first guide means 7a configured to allow the movement of the floating element 6 along the direction of action X-X. The first guide means 7a therefore allow the floating element 6 to be connected to a bearing element or base 8 of the apparatus 1 in translation along the longitudinal direction X-X.

With reference to Figure 1, preferably, the actuation means 5 comprise first and second actuation means 5a configured to control the movement of the floating element along the longitudinal direction X-X.

According to one aspect the first actuation means 5a are therefore operatively associated with the first guide means 7a, i.e. their drive causes the sliding of the floating element 6 in the first guide means 7a along the longitudinal direction X-X.

In the embodiment shown in Figures 1-7, the first actuation means 5 are of the hydraulic type, i.e. they comprise a piston hydraulically actuated by a pressurized fluid. However, it should be specified that in alternative embodiments the first actuation means can be of the pneumatic or electric motorized type.

Preferably, the apparatus 1 further comprises second guide means 7b configured to allow the movement of at least one of the first and second punches 3, 4 with respect to the floating element 6.

In the embodiment shown in Figures 1-7, the second guide means 7b comprise a hole made in the floating element 6, configured to slide the first or second punch 3, 4 therein.

With reference to Figure 1, preferably, the actuation means 5 comprise second actuation means 5b configured to move at least one of the first and second punches 3, 4 along the direction of action X-X with respect to the floating element 6.

According to one aspect the second actuation means 5b are operatively associated with the second guide means 7b, i.e. their drive causes at least one of the first and second punches 3, 4 to slide along the direction of action X-X with respect to the floating element 6.

In the embodiment shown in Figures 1-7, the second actuation means 5b comprise an electric motor adapted to drive the translation of the first punch 3 along the direction of action X-X by means of worm kinematics. However, in alternative embodiments, the second actuation means 5b can be of the hydraulic or pneumatic type.

According to the above, preferably, the floating element 6 comprises a main body 60 having a first portion 60a facing the first side 2A of the support unit 2, and a second portion 60b facing the second side 2B of the support unit 2. In detail, the first and second punches 3, 4 are respectively arranged on the first and second portions 60a, 60b of the main body 60.

According to one aspect, the main body 60 comprises a recess 61, interposed between the first and the second portion 60a, 60b, adapted to at least partially receive the support unit 2. In other words, during use, the workpiece P is disposed by the support unit 2 in the recess 61 so as to be interposed between the first and second portions 60a, 60b and facing opposite sides of the first and second punches 3, 4.

In the embodiment shown in Figures 1-7, the main body 60 has a U-shape.

If the apparatus 1 that is the object of the present invention is employed for mechanical machining by plastic deformation, the support unit 2 comprises a mould 20 adapted to receive the workpiece P.

In the context of the present invention, the term "mould" refers to equipment used in plastic deformation processing to shape the workpiece. In particular, it should be specified that the mould comprises a moulding portion having a geometry that is the negative of that required to be imprinted on the workpiece with the processing process.

In use, the compression forces F1, F2 exerted by the punches 3, 4 plastically deform the workpiece P which, coming into contact with the mould P, in particular with the moulding portion, assumes the desired geometry.

Preferably, the workpiece P has a prevalent extension along the direction of action X-X, in particular it is a tube, a duct or a fitting.

Furthermore, preferably, the mould 20 comprises a moulding portion configured to generate variable section pipes, in particular having shoulders adapted to allow a pressure connection with other pipes.

In one embodiment, at least one of the first and the second punch 3, 4 comprises a counter-mould 30, 40 configured to couple with the mould 20 of the support unit 2 when the first and the second punches 3, 4 are in the operating position.

Preferably, both punches include a counter-mould 30, 40.

It should be specified that the counter-mould 30-40 coupling with the mould 20 completes it by defining with the latter the geometry that is desired to be obtained with the plastic deformation processing.

The counter-moulds are particularly useful when it is desired to obtain annular bulges at the end of the workpiece P, according to what is shown in Figure 7.

With reference to images 1-7, the operating phases of the apparatus 1 that is the object of the present invention will be disclosed below.

Initially, the apparatus 1 is in the resting position shown in Figures 1 and 2. In detail, in the resting position the workpiece P is interposed between the first and second punches 3, 4 which are spaced apart from this along the direction of action X-X.

The drive of the actuation means 5, in particular of the second actuation means 5b, moves the first punch 3 towards the first side 2A of the support unit 2 along the direction of action X-X until the latter abuts against a first end P1 of the workpiece P.

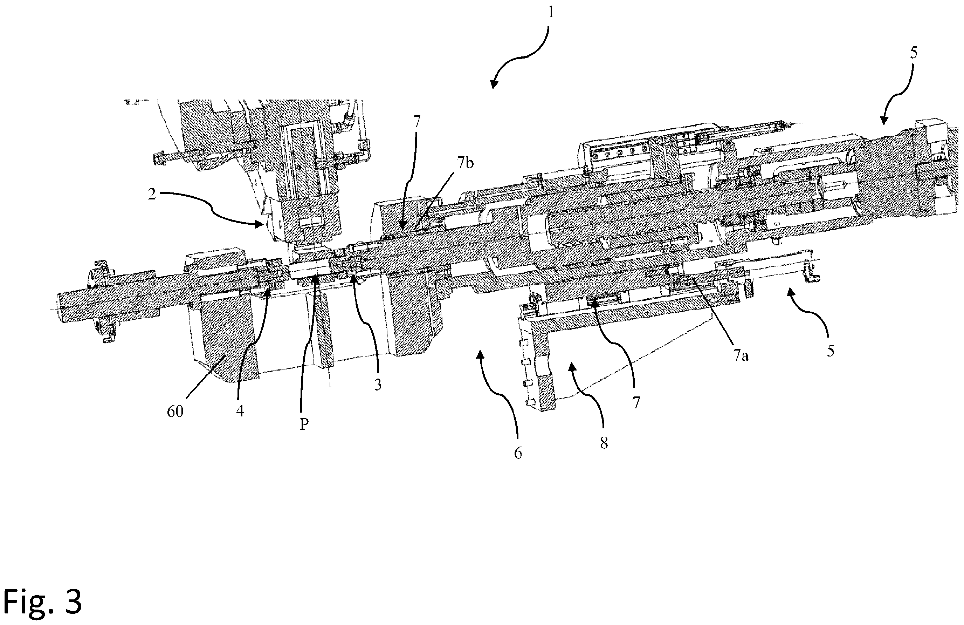

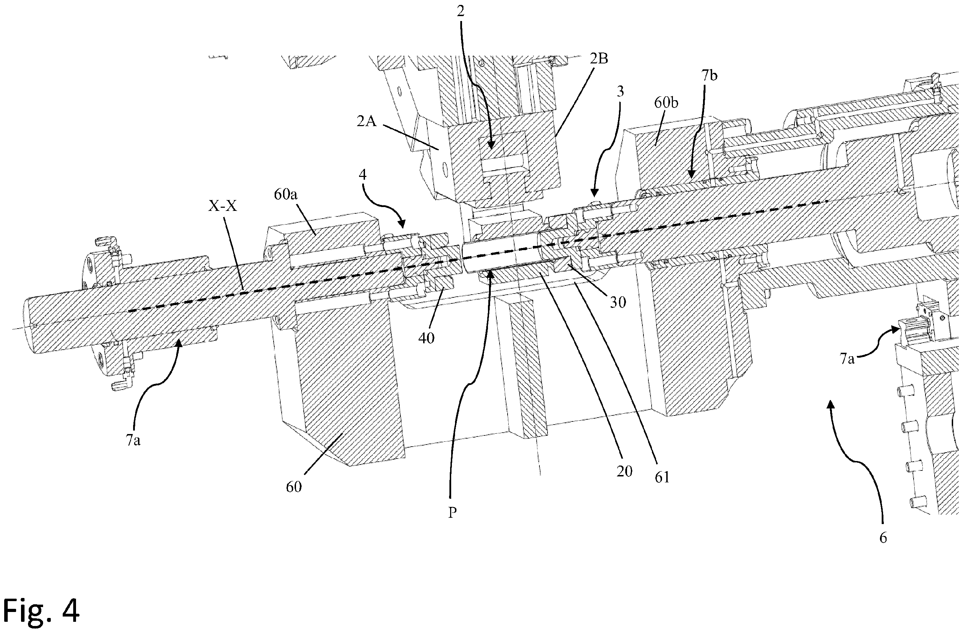

The apparatus 1 is thus brought from the resting position to the dragging position shown in Figures 3 and 4.

It should be specified that, in alternative embodiments of the present invention, the dragging position can be reached by moving the second punch 4 along the direction of action X-X towards the second side 2B of the support unit 2 so that the workpiece P abuts against a second end P2.

Once the dragging position is reached, the further drive of the actuation means 5, in particular of the second actuation means 5b, causes the second punch 4 to be drawn towards the second side 2B of the support unit 2 so that both punches 3, 4 abut against the workpiece P from opposite sides along the direction of action X-X.

Preferably, the second punch 4 is recalled by means of a translation along the direction of action X-X of the floating element 6.

When both punches 3, 4 abut against the workpiece P from opposite sides, the apparatus 1 is in the operating position shown in Figures 5-7. Therefore, the further drive of the actuation means 5, in particular of the second actuation means 5b, generates the compression forces F1, F2 adapted to deform a workpiece P or to assemble a pair of components along the direction of action X-X according to the above.

The actuation means 5, in particular the first and second actuation means 5a, 5b, are then used to move the punches 3, 4 and the floating element 6 along the direction of action X-X to return the apparatus 1 to the resting position of Figure 1. In other words, the punches 3, 4 are moved away from the supporting unit 2.

The object of the present invention is also a machine tool 100 that can be employed for mechanical machining by plastic deformation or for assembling operations of a pair of components to be assembled comprising the apparatus 1 disclosed above.

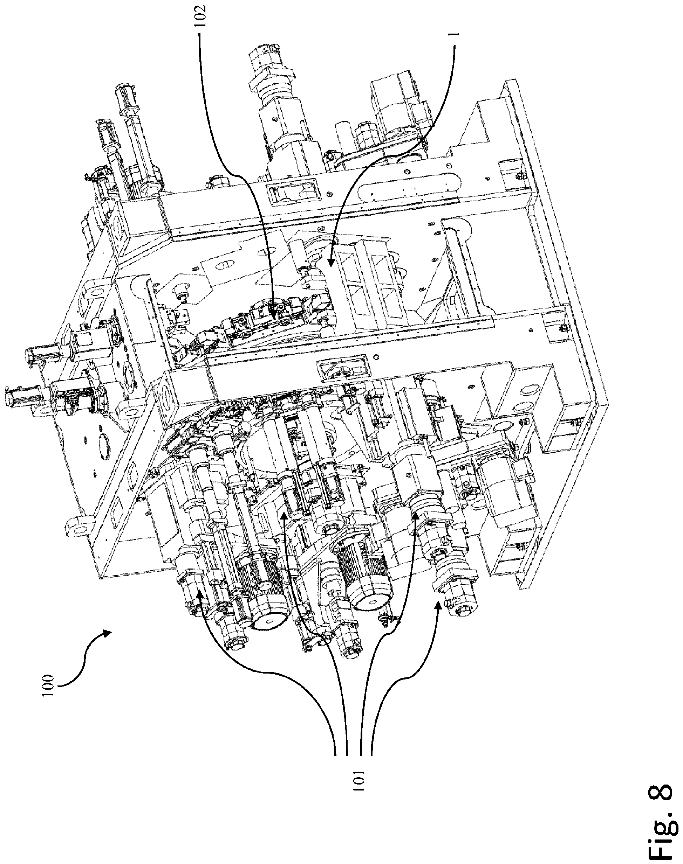

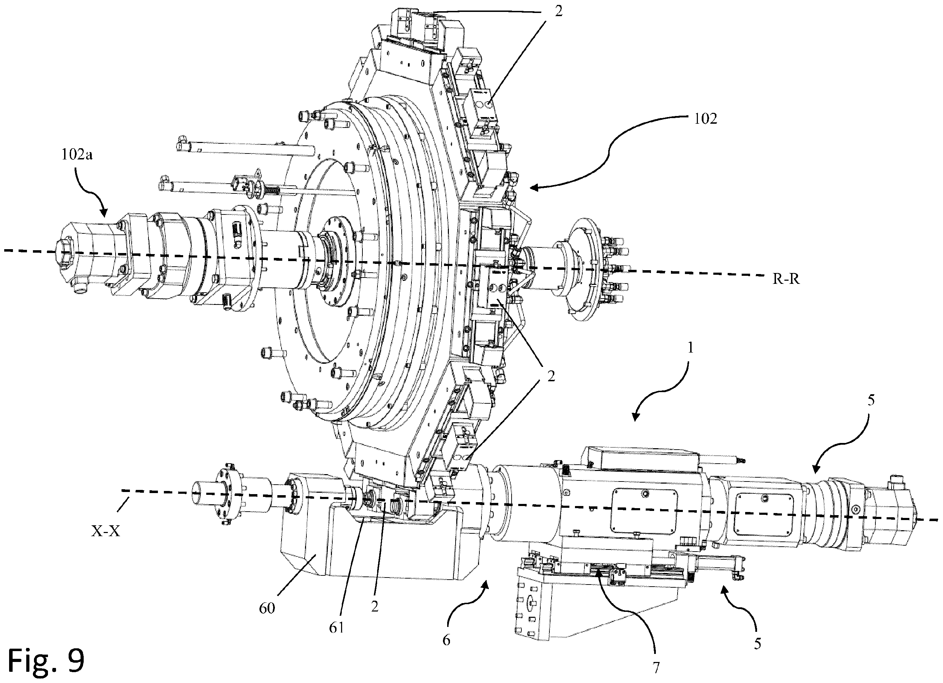

With reference to Figures 8 and 9, preferably, the machine tool 100 is of the automatic piece transfer type (transfer machine). In this regard it should be specified that in the context of the present invention, automatic piece transfer machine refers to a machine tool configured to combine, in a single production unit, the functions of a series of separate machine tools.

According to one aspect, the machine tool 100 comprises a plurality of processing stations 101 configured to perform respective mechanical operations or machining on a plurality of workpieces. Each piece, passing sequentially through the processing stations 101, performs a specific production cycle that transforms it into a finished product or a semi-finished product.

At least one of the processing stations 101 comprises the apparatus 1 disclosed above. Thus, at least one of the processing stations 101 is configured to perform mechanical machining for plastic deformation or component assembling operations.

With reference to Figures 8 and 9, preferably, said machine tool 100 comprises a support table 102 having a plurality of support units 2 that can be sequentially associated with the processing stations 101.

According to a possible embodiment of the machine tool 100, the support table 102 is configured to rotate around a rotation axis R-R and the processing stations 101 are arranged circumferentially with respect to the rotation axis R-R.

During use, the support table 102 is rotated by a motor 102a, preferably electrically driven, around the rotation axis R-R to sequentially associate the support units 2 to the processing stations 101.

Preferably, the direction of action X-X is oriented parallel to the axis of rotation R-R as shown in Figure 9.

## Claims

1. Apparatus (1) for mechanical machining by plastic deformation, comprising:
- a support unit (2) configured to support a workpiece (P);
- a first and a second punch (3, 4) opposite each other and arranged on opposite sides of the support unit (2), the first and the second punch (3, 4) being movable from and toward the support unit (2) along a direction of action (X-X) to switch between an operating position in which exert a pair of compression forces (F 1, F2) on the workpiece (P) adapted to plastically deform the workpiece (P) and a resting position in which are spaced from the support unit (2), said pair of compression forces (F1, F2) generating a pair of reaction forces (R1, R2) opposite the pair of compression forces (F 1, F2);
- actuation means (5) adapted to control the movement of the first and the second punch (3, 4) from and toward the support unit (2) along the direction of action (X-X); **characterized in that it comprises** a floating element (6), movable along the direction of action (X-X) of the first and second punch (3, 4), adapted to support the first and the second punch (3, 4) from opposite sides of the support unit (2) along the direction of action (X-X), said floating element (6) being configured to receive said reaction forces (R1, R2).

2. Apparatus (1) for assembling a pair of components comprising:
- a support unit (2) configured to support at least one component of a piece to be assembled;
- a first and a second punch (3, 4) opposite to each other and arranged on opposite sides of the support unit (2), the first and the second punch (3, 4) being movable from and toward the support unit (2) along a direction of action (X-X) to switch between an operating position in which exert a pair of compression forces (F1, F2) on the pair of components adapted to assemble the pair of components and a resting position in which are spaced from the support unit (2), said pair of compression forces (F 1, F2) generating a pair of reaction forces (R1, R2) opposite the pair of compression forces (F 1, F2);
- actuation means (5) adapted to control the movement of the first and the second punch (3, 4) from and toward the support unit (2) along the direction of action (X-X); **characterized in that it comprises** a floating element (6), movable along the direction of action (X-X) of the first and second punch (3, 4), adapted to support the first and the second punch (3, 4) from opposite sides of the support unit (2) along the direction of action (X-X), said floating element (6) being configured to receive said reaction forces (R1, R2).

3. Apparatus (1) according to claim 1 or 2, wherein the floating element (6) is movable along the direction of action (X-X) with respect to the support unit (2).

4. Apparatus (1) according to any one of claims 1 to 3 comprising first guide means (7a) configured to allow the movement of the floating element (6) along the longitudinal direction (X-X), and second guide means (7b) configured to allow the movement of at least one of the first and the second punch (3, 4) with respect to the floating element (6) along the longitudinal direction (X-X).

5. Apparatus (1) according to any one of the preceding claims, wherein:
- the support unit (2) has a first side (2A) and a second side (2B) opposite the first side (2A) along the direction of action (X-X);
- the floating element (6) comprises a main body (60) having a first portion (60a) facing the first side (2A) of the support unit (2), and a second portion (60b) facing the second side (2B) of the support unit (2), the first and the second punch (3, 4) being respectively arranged on the first and the second portion (60a, 60b) of the main body (60).

6. Apparatus (1) according to claim 5, wherein the main body (60) comprises a recess (61), interposed between the first and the second portion (60a, 60b), adapted to at least partially receive the support unit (2).

7. Apparatus (1) according to claim 5 or 6, wherein the main body (60) is U-shaped.

8. Apparatus (1) according to claim 1 or any one of claims 3 to 7, wherein:
- the support unit (2) comprises a mould (20) in which the workpiece (P) can be inserted, the first and the second punch (3, 4) being configured to exert said pair of compression forces (F 1, F2) on the workpiece (P) to plastically deform the workpiece (P) against the mould (20),
- at least one of the first and the second punch (3, 4) comprises a counter-mould (30, 40) configured to couple with the mould (20) of the support unit (2) when the first and the second punch (3, 4) are in the operating position.

9. Apparatus (1) according to any one of the preceding claims, wherein the actuation means (5) comprise first actuation means (5a) configured to move the floating element (6) along the direction of action (X-X), and second actuation means (5b) configured to move at least one of the first and the second punch (3, 4) along the direction of action (X-X) with respect to the floating element (6).

10. Machine tool (100) for mechanical machining by plastic deformation, **characterized in that** it comprises at least one apparatus (1) according to any one of claims 1 and from 3 to 9.

11. Machine tool (100) for assembling a pair of components, **characterized in that** it comprises at least one apparatus (1) according to any one of claims 2, from 3 to 7 and 9.

12. Machine tool (100) according to claim 10 or 11, comprising:
- a plurality of working stations (101) configured to perform mechanical operations on a plurality of workpieces;
- a support table (102) comprising a plurality of support units (2) sequentially associable to the working stations (101);
wherein at least one of the working stations (101) comprises said apparatus (1).

13. Machine tool (100) according to claim 12, wherein:
- the support table (102) is configured to rotate around a rotation axis (R-R) to sequentially associate the support units (2) to the processing stations (101);
- the direction of action (X-X) is oriented parallel to the rotation axis (R-R).
